# EUROPÄISCHE PATENTSCHRIFT

(11) **EP 0 902 820 B1**
(45) Veröffentlichungstag und Bekanntmachung des Hinweises auf die Patenterteilung: **19.09.2001**
(21) Anmeldenummer: 97923055.4
(22) Anmeldetag: 12.05.1997
(51) Int. Cl.: C09K 19/38, C09K 19/40

(54) **FARBIGE MONOMERE ENTHALTENDE CHIRALE cLCPS**
CHIRAL cLCPS CONTAINING COLOURED MONOMERS
POLYMERES A CRISTAUX LIQUIDES CHOLESTERIQUES CHIRAUX CONTENANT DES MONOMERES COLORES

(30) Priorität: 23.05.1996 DE 19620746
(43) Veröffentlichungstag der Anmeldung: 24.03.1999
(73) Patentinhaber: Clariant GmbH, 65929 Frankfurt am Main (DE)
(72) Erfinder: DIETZ, Erwin, D-61462 Königstein (DE); SCHÖNFELD, Axel, D-65207 Wiesbaden (DE)
(86) Internationale Anmeldenummer: EP9702411
(87) Internationale Veröffentlichungsnummer: WO9744408

(56) Entgegenhaltungen:
- EP-A- 0 090 282
- EP-A- 0 260 687
- EP-A- 0 333 022
- EP-A- 0 391 368
- DE-A- 4 418 075

## Beschreibung

Die Erfindung betrifft cholesterische Flüssigkristallpolymere (cLCPs), die farbige Monomerbausteine enthalten, ein Verfahren zu ihrer Herstellung sowie deren Verwendung.

Cholesterische Hauptkettenpolymere sind bekannt und können analog nematischer Hauptkettenpolymere hergestellt werden, indem ein zusätzliches chirales Comonomer verwendet wird (US-A-4,412,059; EP-A-0 196 785; EP-A-0 608 991; EP-A-0 391 368) oder indem nematische Hauptkettenpolymere (LCP) mit zusätzlichen chiralen Comonomeren umgesetzt werden (EP-A-0 283 273). Cholesterische Hauptkettenpolymere zeichnen sich durch ihre helikale Überstruktur aus. Diese führt zum einen dazu, daß das Material nicht mehr die bei nematischen Flüssigkristallpolymeren übliche Anisotropie der mechanischen Eigenschaften aufweist. Je nach Gehalt an chiralem Monomer zeigt das Material ausgeprägte Farbeffekte, die auf der selektiven Reflexion an der helikalen Überstruktur beruhen. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine umso kürzere Wellenlänge hat, je kleiner die Ganghöhe der Helix ist. Die sich ausbildende Ganghöhe der Helix hängt im wesentlichen von dem Anteil des chiralen Comonomers, der Art des Einbaus in das Polymer, des Polymerisationsgrads und der Struktur des chiralen Comonomers ab.

Außerdem zeigen viele Systeme noch eine Temperaturabhängigkeit der Ganghöhe in der cholesterischen Phase.

Die Farbe der cholesterischen Flüssigkristalle beruht auf einer selektiven Reflexion. Sie ist also von grundsätzlich anderer Natur als die Farbgebung von klassischen Pigmenten, deren Farbe auf Lichtabsorptionen beruht (Absorptionspigmente).

Um bei dünnen Schichten cholesterischer Flüssigkristalle zu ausgeprägten Farbeffekten zu gelangen, ist in der Regel ein absorbierender, insbesondere schwarzer Untergrund notwendig, da ansonsten aufgrund eines nicht hinreichend ausgeprägten Deckvermögens der cholesterischen Flüssigkristalle der nicht selektive Teil des Lichts am Untergrund reflektiert wird, was den Farbeindruck schwächt. Es ist ferner bekannt (H. J. Eberle, Liquid Crystals, 1989, Vol. 5, No. 3, Seite 907 - 916), daß anstelle eines schwarzen Untergrunds auch anders eingefärbte Untergründe verwendet werden können und daß es auch möglich ist, die Pigmente aus Flüssigkristall-Netzwerken mit klassischen Absorptionspigmenten zu mischen, was zu neuen winkelabhängigen Farbeindrücken führt. So wird in der vorstehend genannten Schrift beispielsweise eine Mischung eines gelben cholesterischen Flüssigkristalls mit einem grünen Absorptionspigment beschrieben, die mit zunehmendem Blickwinkel einen Rotshift ergibt. Bei Verwendung des gleichen Flüssigkristalls auf einem schwarzen Untergrund wird hingegen ein Blaushift beobachtet.

Von Nachteil bei diesen Farbgebungsmöglichkeiten ist das Mischen zweier verschiedener farbgebender Materialen, nämlich des klassischen Absorptionspigments mit dem cholesterischen Flüssigkristall-Pigment, welches einen zusätzlichen Dispergierschritt erfordert. Auch das farbige Lackieren des Untergrundes ist mit Nachteilen behaftet. Zum einen ist dies ein zusätzlicher Prozeßschritt, der zusätzliche Kosten verursacht, und zum anderen wird der Farbeffekt nun von der Dicke der darüber aufgebrachten Flüssigkristallschicht abhängig, da diese das Verhältnis von Absorptionspigment zu Flüssigkristall-Pigment bestimmt. Außerdem zeigen auf diese Weise erzeugte Lacke nicht die geforderte einfache Reparaturfähigkeit.

Aufgabe der vorliegenden Erfindung ist es, die im Stand der Technik aufgeführten Nachteile zu umgehen und ein Material zur Verfügung zu stellen, welches vom Betrachtungswinkel abhängige Farben aufweist, aber direkt als Einkomponentenpigment eingesetzt werden kann und eine hohe Temperaturstabilität und eine hohe Chemikalienresistenz (Unlöslichkeit) aufweist.

Es wurde gefunden, daß sich die im Stand der Technik aufgeführten Nachteile überraschenderweise durch cholesterische flüssigkristalline Polymere, die mindestens ein weiteres, farbiges Comonomer enthalten, umgehen lassen und daß auf einfache Weise neuartige Materialien bereitgestellt werden können.

Gegenstand der vorliegenden Erfindung ist ein cholesterisches flüssigkristallines Hauptkettenpolymer (cLCP), welches mindestens ein farbiges Comonomer, das Licht im sichtbaren Wellenlängenbereich absorbiert, enthält.

Verwendet man bei der Synthese der cholesterischen flüssigkristallinen Polymere ein zusätzliches Comonomer, welches Licht im sichtbaren Bereich absorbiert (mindestens ein Absorptionsmaximum zwischen 350 und 750 nm), so erhält man Polymere, die im nicht orientierten Zustand die Farbe des zusätzlichen Comonomers aufweisen. Orientiert man eine solche Probe in der cholesterischen Phase, so kann man die brillante Coloristik der Selektivreflexion beobachten. Diese unterscheidet sich überraschenderweise von der der cholesterischen Polymeren dadurch, daß die Farbtöne durch die Absorption moduliert werden. Dies bedeutet, daß ein Polymer welches beispielsweise ein rotes Comonomer enthält, in der cholesterischen Phase anstelle einer beispielsweise goldgelben Coloristik eine rotgoldene Coloristik aufweist. Auch erscheint die Winkelabhängigkeit der cholesterischen Reflexionsfarben durch die Modulation mit der Absorptionsfarbe in neuer Weise. So zeigt ein cholesterisches flüssigkristallines Polymer mit der besagten rotgoldenen Coloristik bei schrägem Anblick eine rotstichig grüne Coloristik.

Die Hauptkettenpolymere sind vorzugsweise flüssigkristalline Polyester, Polyamide oder Polyesteramide, die aromatische und/oder cycloaliphatische Hydroxycarbonsäuren, aromatische Aminocarbonsäuren; aromatische und/oder cycloaliphatische Dicarbonsäuren, und aromatische und/oder cycloaliphatische Diole und/oder Diamine; sowie ein oder mehrere chirale, bifunktionelle Comonomere enthalten.

Cholesterische flüssigkristalline Hauptkettenpolymere werden im allgemeinen aus einer chiralen Komponente sowie aus Hydroxycarbonsäuren und/oder einer Kombination aus Dicarbonsäuren und Diolen hergestellt. In der Regel bestehen die Polymere im wesentlichen aus aromatischen Bestandteilen. Es ist jedoch auch möglich, aliphatische und cycloaliphatische Komponenten, wie beispielsweise Cyclohexandicarbonsäure, einzusetzen.

Bei der Auswahl der farbigen Monomerbausteine ist darauf zu achten, daß sie die zur Synthese notweridige thermische Stabilität aufweisen. Bei temperaturempfindlichen, farbigen Monomerbausteinen ist es vorteilhaft, eine Syntheseroute zu wählen, die hohe Temperaturen vermeidet. So kann beispielsweise bei der Herstellung eines Polyesters im Falle von temperaturempfindlichen, farbigen Monomerbausteinen von der Schmelzkondensation auf die schonendere Kondensation in nichtwässriger Suspension oder auf die Kondensation von Säurechloriden mit Hydroxy- oder Aminoverbindungen in Lösungsmitteln zurückgegriffen werden.

Als farbige Comonomere im Sinne der vorliegenden Erfindung kommen Hydroxy-, Amino- und/oder Carboxy-Derivate von Anthanthron-, Anthrachinon-, Dioxazin-, Phthalocyanin-, Chinacridon-, Diketopyrrolopyrrol-, Perylen-, Perinon-, Azomethin- oder Azopigmenten, Aminostilbencarbonsäuren oder eine Kombination davon in Betracht.

Bevorzugt im Sinne der vorliegenden Erfindung sind cholesterische flüssigkristalline Hauptkettenpolymere, bestehend aus
a) 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 50 Moi% einer oder mehrerer Verbindungen aus der Gruppe der aromatischen Dicarbonsäuren und cycloaliphatischen Dicarbonsäuren;
c) 0 bis 50 Mol% einer oder mehrerer Verbindungen aus der Gruppe der aromatischen und cycloaliphatischen Diole und Diamine;
d) 0,1 bis 40 Mol%, vorzugsweise 1 bis 25 Mol%, an chiralen, bifunktionellen Comonomeren; und
e) 0,1 bis 50 Mol%, vorzugsweise 1 bis 25 Mol%, an bifunktionellen, farbigen Komponenten, die eine Absorption im Wellenlängenbereich des sichtbaren Lichts aufweisen (Chromophore), wobei die Summe 100 Mol% ergibt.

Bei den angegebenen Prozentsätzen ist darauf zu achten, daß die dem Fachmann bekannte Stöchiometrie der funktionellen Gruppen zur Polykondensation gewährleistet ist. Zusätzlich können die Polymere noch Komponenten mit nur einer funktionellen Gruppe oder mit mehr als zwei funktionellen Gruppen, wie beispielsweise Dihydroxybenzoesäure, Trihydroxybenzole oder Trimellitsäure enthalten. Auf diese Weise kann Einfluß auf das Molekulargewicht der Polymeren genommen werden. Die Komponenten mit mehr als zwei funktionellen Gruppen wirken als Verzweigungsstelle im Polymer und dürfen nur in geringen Konzentrationen, beispielsweise 0 bis 5 Mol-%, zugegeben werden, wenn eine Vernetzung des Materials während der Kondensation vermieden werden soll.

Besonders bevorzugt sind cholesterische Hauptgruppenpolymere, die aus folgenden Bausteinen der einzelnen Monomergruppen aufgebaut sind:
a) Aromatische Hydroxycarbonsäuren, Aminocarbonsäuren:
   Hydroxybenzoesäuren, Hydroxynaphthalincarbonsäuren, Hydroxybiphenylcarbonsäuren, Aminobenzoesäuren, Hydroxyzimtsäuren
b) Aromatische Dicarbonsäuren, aliphatische Dicarbonsäuren:
   Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren, Carboxyzimtsäuren sowie 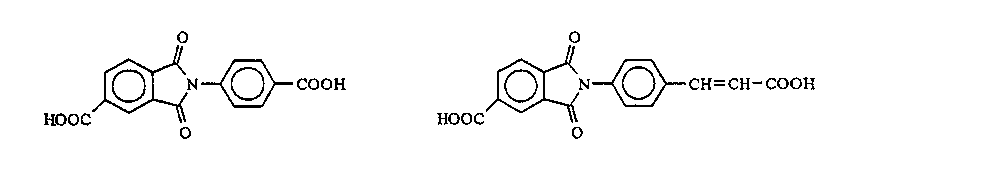
c) Aromatische Diole, Aminophenole, Diamine:
   Hydrochinone, Dihydroxybiphenyle, Tetramethyldihydroxybiphenyle, Naphthalindiole, Dihydroxydiphenylsulfone, Dyihydroxydiphenylether, Dihydroxyterphenyle, Dihydroxydiphenylketone, Phenylendiamine, Diaminoanthrachinone, Dihydroxyanthrachinone sowie 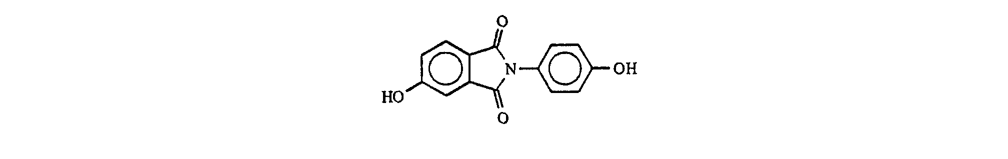
d) Chirale, bifunktionelle Monomere:
   Isosorbid, Isomannid, Isoidid, Camphersäure, (D)- oder (L)- Methylpiperazin, (D)- oder (L)- 3-Methyladipinsäure, Butan-2,3-diol sowie 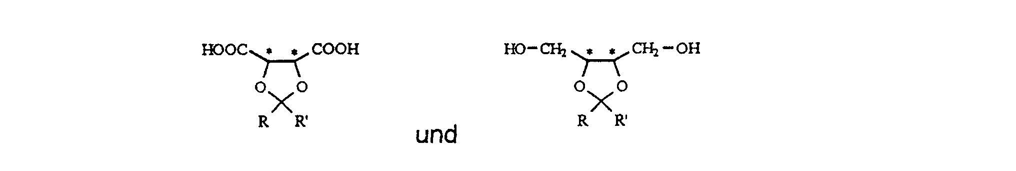 wobei R und R' jeweils unabhängig voneinander H, C₁-C₆-Alkyl oder Phenyl, vorzugsweise H oder CH₃, sind.
e) farbige, bifunktionelle Comonomere wie beispielsweise 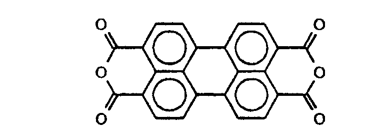 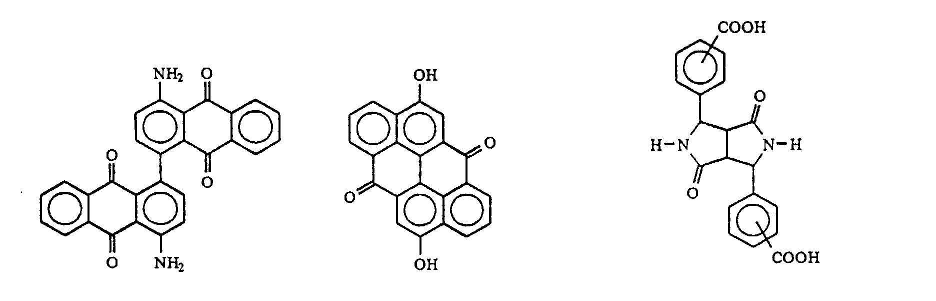 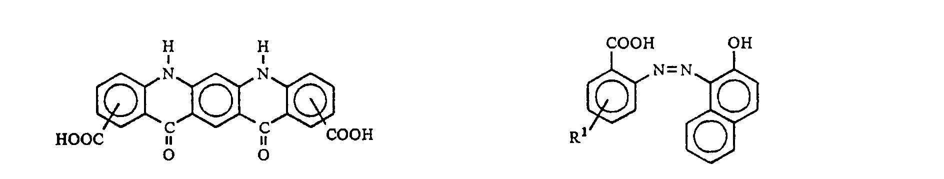 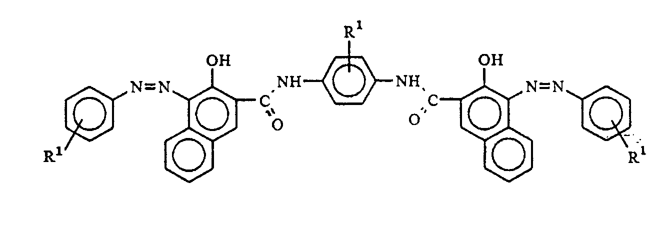 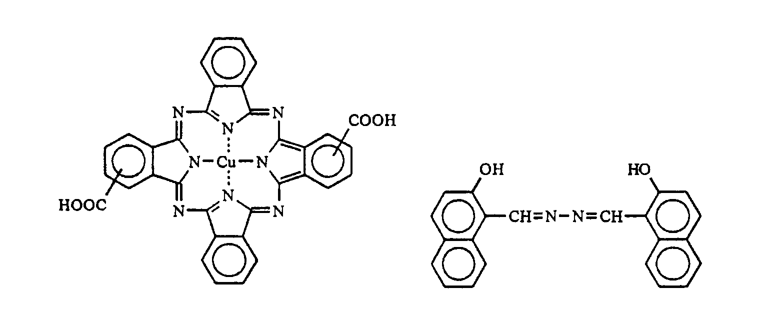 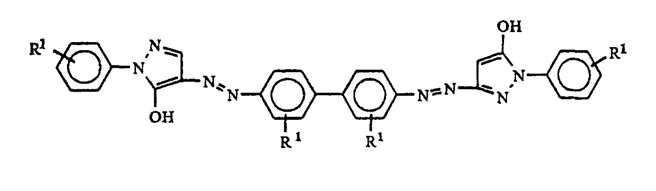 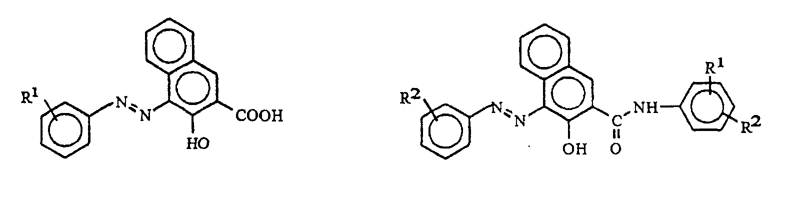 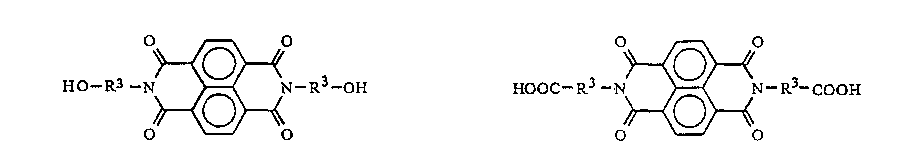 wobei R³ für C₆-C₁₈-Arylen, bevorzugt Phenylen, steht;
   R¹ für H, Halogen, bevorzugt F, Cl, Br, Methoxy, CN, NO₂, C₆-C₁₂-Aryl oder C₁-C₄-Alkyl steht und
   R² für eine Sulfonsäuregruppe oder deren Derivate, vorzugsweise Sulfonamid oder Sulfonsäuresalze, steht.

Bei der Verwendung von Sulfonsäuregruppen als funktionelle Gruppe zur Kondensation kann es vorteilhaft sein, diese in einer aktivierten Form einzusetzen, z. B. als Sulfochlorid oder als Sulfonsäureester.

Anstelle der aufgeführten Substanzen können auch andere Strukturisomere oder Derivate von diesen eingesetzt werden. So ist es beispielsweise möglich, anstelle von 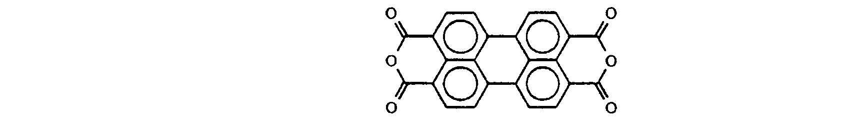 auch ein Derivat der Formel 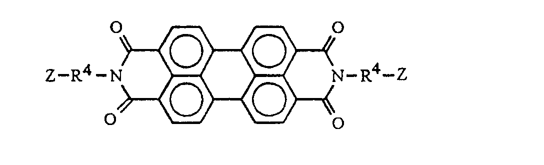 einzusetzen, wobei R⁴ für verzweigtes oder unverzweigtes C₁-C₂₀-Alkylen, C₆-C₁₀-Arylen oder C₇-C₂₀-Aralkylen und Z für -COOH, -OH oder -NH₂ steht.

Die beschriebenen Polymerbausteine können noch weitere Substituenten, wie beispielsweise Methyl, Methoxy, Cyano oder Halogen, enthalten.

Ganz besonders bevorzugt im Sinne der vorliegenden Erfindung sind Polymere, enthaltend ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl; Camphersäure, Isosorbid, Isomannid als chirale Komponente; sowie als farbige Komponente eine oder mehrere der Verbindungen N,N'-Bis-(3-aminophenyl)-3,4,9,10-perylentetracarbonsäurediimid, N,N'-Bis-(4-hydroxyphenyl)-3,4,9,10-perylentetracarbonsäurediimid, N,N'-Bis-(4-carboxyphenyl)-3,4,9,10-perylentetracarbonsäurediimid und insbesondere Perylen-3,4,9,10-tetracarbonsäure-3,4,9,10-dianhydrid.

Gegenstand der Erfindung ist auch ein Verfahren zur Herstellung von cholesterischen flüssigkristallinen Polymeren, dadurch gekennzeichnet, daß die dem besagten Polymer zugrundeliegenden monomeren Verbindungen als solche oder in Form eines reaktiven Derivats in der Schmelze, in Lösung oder in emulgierter oder disperser Phase kondensiert werden.

Die erfindungsgemäß eingesetzten Monomere können entweder direkt eingesetzt werden, oder es können auch zweckmäßige Vorstufen verwendet werden, die sich unter den nachfolgenden Reaktionsbedingungen zu den gewünschten Monomeren umsetzen. So kann beispielsweise statt N-(4-Hydroxyphenyl)trimellitimid Aminophenol und Trimellitsäureanhydrid eingesetzt werden.

Die Polykondensation kann nach allen üblichen Methoden durchgeführt werden. Beispielsweise eignet sich die Schmelzkondensation mit Acetanhydrid, die beispielsweise in EP-A-0 391 368 beschrieben ist. Die Kondensation mit Acetanhydrid ist auch in Lösung oder in disperser oder emulgierter Phase möglich.

Bevorzugt erfolgt die Verknüpfung der Monomere über Esterbindungen (Polyester), Amidbindungen (Polyesteramid/Polyamid) und/oder über Imidbindungen (Polyesterimid/Polyimid), jedoch kann die Verknüpfung auch über andere bekannte Verknüpfungsarten erfolgen.

Bei der Auswahl der Monomerbausteine ist darauf zu achten, daß die dem Fachmann bekannte Stöchiometrie der funktionellen Gruppen gewährleistet ist, d. h. daß funktionelle Gruppen, die miteinander in der Polykondensationsreaktion reagieren, in entsprechenden molaren Verhältnissen eingesetzt werden. Beispielsweise bei Verwendung von Dicarbonsäuren und Diolen muß eine der Anzahl an Carboxylgruppen entsprechende Anzahl an Hydroxylgruppen vorhanden sein. Es können jedoch auch gezielte Überschüsse an funktionellen Gruppen, beispielsweise mehr Carboxygruppen als Hydroxygruppen, eingesetzt werden, um so beispielsweise das erzielbare Molekulargewicht zu steuern.

Anstelle der Carbonsäuren können auch Carbonsäurederivate, wie beispielsweise Säurechloride oder Carbonsäureester, eingesetzt werden. Anstelle der Hydroxykomponenten können auch entsprechende Hydroxyderivate, wie beispielsweise die acetylierten Hydroxyverbindungen, eingesetzt werden.

Die Komponenten können entweder direkt als niedermolekulare Monomere eingesetzt werden, oder es können auch niedermolekulare oder polymere Komponenten mit einem Polymer, welches schon einen Teil der Komponenten enthält, umgesetzt werden. So kann beispielsweise ein cLCP, welches noch keine farbigen Komponenten enthält, mit entsprechenden farbigen Komponenten in der Schmelze, in Lösung oder in disperser oder emulgierter Phase gemischt und zur Reaktion gebracht werden, so daß beispielsweise über eine Umesterung die farbige Komponente in das Polymer eingebaut wird.

Für die Synthese der erfindungsgemäßen Polymere können die farbigen Comonomere entweder direkt eingesetzt werden, oder es können Vorstufen von diesen eingesetzt werden, die im Laufe der Kondensation zu den im sichtbaren Wellenlängenbereich absorbierenden Komponenten umgesetzt werden. So können beispielsweise das selbst nicht farbige Naphthalintetracarbonsäuredianhydrid und Aminophenol eingesetzt werden, die dann im Laufe der Reaktion über eine Imidbindung eine farbige Komponente bilden.

Die erfindungsgemäßen Polymere können auch vernetzbare Gruppen enthalten, so daß es möglich ist, ein orientiertes Flüssigkristallpolymer durch beispielsweise eine Photovernetzung zu fixieren. Vernetzte cLCPs können außerdem erhalten werden, indem man niedermolekulare Precurser mit mindestens drei funktionellen Gruppen oder mit mindestens zwei polymerisierbaren Doppelbindungen direkt vernetzt.

In einer bevorzugten Ausführungsform weisen die cLCPs eine sehr geringe Löslichkeit auf, so daß ihre Molekulargewichte nicht mit kommerziell üblichen Methoden (GPC, Lichtstreuung) bestimmt werden können. Als Maß für das Molekulargewicht kann die intrinsische Viskosität der Polymere in einer Lösung aus Pentafluorphenol/Hexafluorisopropanol herangezogen werden. Geeignet sind Polymere mit einer intrinsischen Viskosität zwischen 0,1 dl/g und 10 dl/g.

Die erfindungsgemäßen Polymere können direkt eingesetzt werden. Es ist jedoch auch möglich, Blends aus den erfindungsgemäßen, Polymeren herzustellen. Die Blends können entweder aus verschiedenen erfindungsgemäßen Polymeren bestehen, es ist jedoch auch möglich, die erfindungsgemäßen Polymere mit cholesterischen oder nematischen Polymeren zu mischen.

Die erfindungsgemäßen Polymere können als Werkstoff weiterverarbeitet werden. Ein Werkstoff ist ein geformtes Gebilde wie beispielsweise Spritzgußartikel, extrudierte Profile oder Rohre, Bändchen, Folien oder Fasern.

Insbesondere eignen sich die erfindungsgemäßen Polymere als Basismaterial zur Herstellung von Effektbeschichtungen aller Art, wie z. B. Pulvereffektbeschichtungen, sowie zur Herstellung von insbesondere plättchenförmigen Effektpigmenten, die sich durch einen vom farbigen Comonomer und vom Blickwinkel abhängigen Farbeffekt und ein erhöhtes Deckungsvermögen auszeichnen.

Fallen die erfindungsgemäßen Polymere nicht bereits bei der Synthese als feinteiliges Pulver an, so werden sie nach der Synthese für eine Anwendung als Effektpigment oder für Beschichtungen in ein feinteiliges Pulver überführt. Wird die Synthese als Schmelzkondensation durchgeführt, so bietet sich nach der Synthese als erster Zerkleinerungsschritt eine Strang- oder Bandextrusion an. Die dabei erhaltenen Stränge oder Bänder lassen sich in bekannter Weise mit Schnitzlern oder Granulatoren in Chips oder Stranggranulate überführen. Die Polymere lassen sich jedoch auch auf anderen Wegen isolieren und anschließend durch Schneid- und Sägeprozesse grob zerkleinern. Zur weiteren Zerkleinerung bieten sich Mahlaggregate aller Arten und Ausführungsformen an. Dabei kann die erforderliche Endfeinheit in einem Verfahrensschritt oder auch in mehreren Teilschritten in gleichen oder verschiedenen Mühlentypen erreicht werden. Wird durch den ausgeführten Mahlprozess nicht direkt die gewünschte Mindestfeinheit und Korngrößenverteilung erzielt, so ist es angebracht, das Mahlgut während des Mahlprozesses oder nach dem Mahlprozess Sieb- oder Klassifizierprozessen zu unterwerfen, um die gewünschte Mindestfeinheit zu garantieren und eine gewünschte optimale Korngrössenfraktion zu erhalten. Als Mahlaggregate sind beispielsweise Schwing-, Scheibenschwing-, Scheiben-, Planeten-, Fliehkraft-, Mörser-, Kugel-, Schlagkreuz-, Schlagrotor-, Schneid-, Hammer-, Messer-, Rotor-Stator-, Prallteller-, Kugel- und insbesondere Ultra-Zentrifugal-, Universal-, Stift- und Luftstrahlmühlen geeignet. In speziellen Fällen kann auch eine Naßmahlung in Kugel-, Sand-, Schwing- oder Perlmühlen durchgeführt werden.

Eine Mahlung der erfindungsgemäßen Polymere kann unterbleiben, wenn sie durch Polymerisation in einer emulgierten oder dispergierten Phase hergestellt werden, wobei in der Regel ein feinteiliges Pulver erhalten wird.

Pulvereffektbeschichtungen lassen sich nach folgenden bevorzugten Methoden applizieren:
Das feinteilige Polymerpulver wird beim Versprühprozess elektrostatisch aufgeladen. Dies geschieht beim Corona-Verfahren durch Vorbeiführen des Pulvers an einer geladenen Corona. Dabei wird das Pulver selbst aufgeladen. Beim triboelektrischen bzw. elektrokinetischen Verfahren wird vom Prinzip der Reibungselektrizität Gebrauch gemacht. Das Pulver erhält im Sprühgerät eine elektrostatische Aufladung, die der Ladung des Reibungspartners, im allgemeinen ein Schlauch oder ein Sprührohr (beispielsweise aus Polytetrafluorethylen), entgegengesetzt ist. Die elektrostatische Aufladung führt zu einem hohen Abscheidegrad des Pulvers auf dem zu beschichtenden Gegenstand. Nach dem Auftragprozess auf das Objekt wird die Pulverschicht auf Temperaturen oberhalb des Erweichungspunktes des Pulvers erhitzt, bei welchen die Polymere einen homogenen Film bilden und die helikalen Überstrukturen ausbilden. Die Temperatur, bei welcher die Ausbildung der helikalen Struktur beginnt, wird im folgenden als Chiralisierungstemperatur bezeichnet.

Die speziellen optischen Eigenschaften einer Pulvereffektbeschichtung werden erst beobachtet, wenn die Moleküle oberhalb der Chiralisierungstemperatur des Polymeren die helikale Struktur ausbilden. Der Übergang in die cholesterische Phase erfolgt in vielen Fällen bereits bei der Synthese der Polymeren. Die Wellenlänge der Selektivreflexion der erfindungsgemäß eingesetzten cLCPs wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der beschichteten Substrate läßt sich die Ganghöhe der Helix und somit die Selektivreflexion dauerhaft einfrieren. Beim langsamen Abkühlen muß mit coloristischen Veränderungen gerechnet werden. Im allgemeinen werden auch auf diese Weise gefärbte Substrate erhalten. Es ist jedoch schwierig, die Endcoloristik vorherzubestimmen. Wird das abgekühlte Substrat erneut erhitzt, so lassen sich neue oder auch wieder die gleichen Ganghöhen der Helix und somit die Wellenlänge der Selektivreflexion einstellen. Durch diesen Vorgang kann die Coloristik des beschichteten Substrats auf einfache Weise variiert und korrigiert werden. Für die Anwendung in der Praxis ist es wichtig, daß der Schmelzpunkt und die Chiralisierungstemperatur des Polymeren oberhalb der Gebrauchstemperatur des beschichteten Substrats liegen.

Begünstigt werden kann die Ausbildung der helikalen Struktur durch die Temperatur, die Einwirkung von Scherkräften und durch Untergründe mit polymeren Schichten, wie beispielsweise Polyvinylalkohol, Cellulosederivate und Polyimide. Der Orientierungsprozess der Polymermoleküle kann je nach Struktur der Polymeren auch durch elektrische und magnetische Felder positiv beeinflußt werden.

Eine weitere, bevorzugte Möglichkeit zur Beschichtung von Objekten mit pulverförmigen Stoffen ist das Flammspritzverfahren. Bei diesem Verfahren wird das Pulver mit einem Trägergas (z. B. in einem Wirbelbett) fluidisiert und der zentralen Düse einer Flammspritzpistole zugeführt. Gleichzeitig wird in der Flammspritzpistole ein Brenngas/Sauerstoffgemisch erzeugt, welches in vielen kleinen um das Zentrum herum ringförmig angeordneten Flämmchen verbrannt wird. Dabei schmelzen die pulverförmigen Teilchen auf und werden anschließend auf dem zu beschichtenden Objekt als Tröpfchen abgeschieden, die im Verlauf des Spritzprozesses zu einem Film zusammenfließen. Dieses Verfahren bietet den besonderen Vorteil, daß der Schmelzvorgang in den Versprühprozess integriert ist, so daß in einem Arbeitsschritt der Auftrag der Beschichtung auf den Gegenstand und die Filmbildung erfolgen kann.

Eine weitere bevorzugte Ausführungsform zur Pulverbeschichtung ist das Wirbelsinterverfahren. Hierzu wird in einem geeigneten Behälter mit Hilfe eines Trägergases und dem erfindungsgemäßen Polymerpulver eine Wirbelschicht erzeugt. Das zu beschichtende Objekt wird in einer separaten Wärmekammer auf die für die Beschichtung notwendige Temperatur erhitzt, und nach Erreichen dieser Temperatur wird es für eine bestimmte Zeit in die Wirbelschicht eingetaucht. Dabei bleiben pulverförmige Teilchen an der Objektoberfläche haften, schmelzen auf, fließen zu einem Film zusammen und bilden die helikale Struktur aus. In manchen Fällen ist es vorteilhaft, das beschichtete Objekt einer weiteren Temperaturbehandlung zu unterziehen, um die Filmbildung und die Orientierung der Polymermoleküle zu verbessern. In anderen Fällen läßt man das Objekt an der Luft abkühlen oder schreckt es mit Wasser ab. Auch dieses Verfahren bietet den besonderen Vorteil, daß der Schmelzvorgang in den Beschichtungsprozess integriert ist, so daß in einem Arbeitsschritt der Auftrag der Beschichtung auf den Gegenstand, die Orientierung der Polymermoleküle und die Filmbildung erfolgen kann.

Bei allen beschriebenen Pulverbeschichtungsverfahren und insbesondere beim Wirbelsinter- und Flammspritzverfahren ist die Teilchenform und damit die Rieselfähigkeit des Pulvers sowie die Korngrößenverteilung des Pulvers von großer Bedeutung. Bevorzugt sind Teilchen, die der Kugelform möglichst nahe kommen und die eine enge Korngrößenverteilung aufweisen. Kugelförmige Teilchen werden auf einfache Weise bei Prozessen erhalten, bei welchen die Polymerisation in einer emulgierten oder dispergierten Phase durchgeführt wird. Bei den Mahlprozessen werden je nach eingesetztem Mühlentyp engere oder breitere Korngrößenverteilungen erhalten. In einigen Fällen ist es vorteilhaft, einen Sieb-, Klassifizier- oder Sichtungsprozess an die Mahlung anzuschließen, um eine möglichst enge Korngrößenverteilung zu erreichen. In anderen Fällen ist es vorteilhaft, zuerst ein sehr feinteiliges Pulver herzustellen, welches dann gezielt zu der gewüschten Teilchengröße agglomeriert werden kann.

Die gewünschte Kornfeinheit ist ausschlaggebend für die Schichtdicke der Pulvereffektbeschichtung, die Art des zu beschichtenden Objekts und das angewandte Applikationsverfahren. Werden auf dem zu beschichtenden Objekt dünne Lackschichten gewünscht, so ist eine mittlere Teilchengröße des Pulvers zwischen 1 und 100 µm, vorzugsweise zwischen 15 und 80 µm, anzustreben.

Werden dicke Schichten auf dem Objekt gewünscht, wie sie normalerweise beim Wirbelsintern und Flammspritzen appliziert werden, so ist eine mittlere Teilchengröße zwischen 80 und 300 µm, vorzugsweise 100 bis 250 µm, vorteilhaft. Beim Wirbelsintern und Flammspritzen ist auf die Einhaltung der Korngrößengrenzen besonders zu achten. Zu kleine Teilchen werden durch die hohen Flammtemperaturen zu stark erhitzt und verkohlen oder werden durch den Gasstrom weggeblasen. Zu grobe Teilchen werden dagegen nicht vollständig aufgeschmolzen und können sich bei der anschließenden Filmbildung nicht optimal orientieren. In Ausnahmefällen kann es jedoch auch vorteilhaft sein, eine außerhalb dieses Bereichs liegende Korngrößenverteilung zu verwenden.

Pulvereffektbeschichtungen können auf die unterschiedlichsten Substrate aufgebracht werden. Dies können beispielsweise Gegenstände aus natürlichen und synthetischen Materialien wie beispielsweise Holz, Kunststoffe, Metall oder Glas sein. Wird die Effektbeschichtung ohne eine Vorbeschichtung aufgebracht, so empfiehlt sich ein Auftrag in einer Schichtdicke, die den Untergrund abdeckt. Es können selbstverständlich auch mehrere Schichten aufgetragen oder semitransparente Beschichtungen hergestellt werden. Besonders bevorzugt ist die Beschichtung der Karosserie oder von Karosserieteilen von Kraftfahrzeugen.

In bevorzugten Fällen wird die Pulvereffektbeschichtung auf Metall- oder Kunststoffuntergründe aufgebracht. Diese sind meistens vorbeschichtet. Das heißt, Kunststoffsubstrate können mit einer Kunststoffgrundierung versehen sein, und metallische Substrate besitzen im allgemeinen eine elektrophoretisch aufgebrachte Grundierung und gegebenenfalls eine oder mehrere weitere Lackschichten wie beispielsweise eine Füllerschicht.

Besonders bevorzugt sind dunkle Untergründe. Unter dunklem Untergrund ist in diesem Zusammenhang nicht nur ein an seiner Oberfläche mit einer dunklen Lackschicht versehenes Substrat zu verstehen, sondern auch ein in sich dunkel gefärbtes Substrat, beispielsweise ein Kunststoffsubstrat oder ein mit einer dunklen Oxidschicht überzogenes Metallsubstrat. Beispiele für dunkle Lackschichten sind elektrophoretisch oder durch Spritz- oder Pulverlackierung aufgebrachte Grundierungen, Kunststoffgrundierungen, Füller- und Steinschlagschutzschichten oder auch unifarbene Basis- und Decklackschichten. Beispiele für dunkle Untergründe sind dunkelrot, dunkelblau, dunkelgrün, dunkelbraun, dunkelgrau und insbesondere schwarz. Pulverbeschichtungen können auch auf hellen Untergründen oder in deckenden Schichten appliziert werden. Dabei kommt jedoch der vom Betrachtungswinkel abhängige Farbeindruck nur abgeschwächt zum Ausdruck.

Pulvereffektbeschichtungen können nach üblichen Methoden mit einem Klarlack überzogen werden. Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und insbesondere Pulverlacke eingesetzt werden. In manchen Fällen kann es zweckmäßig sein, die Klarlackschicht etwas dicker zu wählen oder 2 Klarlackschichten aus gleichen oder verschiedenen Flüssigklarlacken oder Pulverklarlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Eine weitere Möglichkeit, die cholesterischen flüssigkristallinen Polymere in Effektbeschichtungen zu überführen, ist die Lösungsbeschichtung. Hierbei wird das Polymer in einem Lösemittel gelöst und aus der Lösung ein Film auf das zu beschichtende Substrat gebracht. Dies kann beispielsweise durch Spritzen, Rakeln, Gießen, Tauchen oder mit einem Pinsel geschehen. Nach dem Abdampfen des Lösemittels bildet das Polymer eine brillante Effektbeschichtung.

Eine weitere Möglichkeit, die cholesterischen flüssigkristallinen Polymere in Effektbeschichtungen zu überführen, ist die Schmelzbeschichtung. Hierbei wird das Polymer in der Schmelze auf das Substrat aufgezogen oder auf dem Substrat aufgeschmolzen und zu einer dünnen Schicht verarbeitet. Zum Aufbringen des Polymers eignet sich beispielsweise ein beheizbarer Rakel. Der Auftrag kann aber auch mit einfacheren Mitteln, wie beispielsweise einem Spachtel, erfolgen.

Die erfindungsgemäßen Beschichtungen zeichnen sich durch einfache Applikationsverfahren und durch interessante, vom Betrachtungswinkel abhängige coloristische Effekte aus, die durch Absorptionspigmente allein und/oder cLCP-Effektbeschichtungen nicht zu erzielen sind.

In den nachfolgenden Beispielen bedeuten Teile Gewichtsteile.

### Beispiel 1:

9406 Teile 2-Hydroxy-6-naphthoesäure, 13812 Teile 4-Hydroxy-benzoesäure, 2658 Teile Terephthalsäure, 2923 Teile 1,4:3,6-Dianhydro-D-sorbit (Isosorbid), 1371 Teile p-Aminobenzoesäure und 1569 Teile Perylen-3,4,9,10-tetracarbonsäure-3,4,9,10-dianhydrid werden mit 21094 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten. Danach wird die Temperatur innerhalb von 195 Minuten auf 335 °C erhöht. Ab ca. 200 °C beginnt Essigsäure abzudestillieren. Nach dem Erreichen von 335 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und das Polymer abgekühlt und isoliert.

Das Polymer hat eine sehr brillante rötlich silbrige bis rötlich grüne Farbe, die bei schrägem Anblick rötlich violett erscheint.

### Beispiel 2:

27277 Teile 2-Hydroxy-6-naphthoesäure, 34530 Teile 4-Hydroxy-benzoesäure, 4984 Teile Terephthalsäure, 5846 Teile 1,4:3,6-Dianhydro-D-sorbit (Isosorbid), 3486 Teile p-Aminobenzoesäure und 3923 Teile Perylen-3,4,9,10-tetracarbonsäure-3,4,9,10-dianhydrid werden mit 52680 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten.

Danach wird die Temperatur innerhalb von 195 Minuten auf 335 °C erhöht. Ab ca. 200 °C beginnt Essigsäure abzudestillieren. Nach dem Erreichen von 335 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und das Polymer abgekühlt und isoliert.

Das Polymer hat eine sehr brillante rotgoldene Farbe, die bei schrägem Anblick in ein rotstichiges grün übergeht.

### Beispiel 3:

3762 Teile 2-Hydroxy-6-naphthoesäure, 6287 Teile 4-Hydroxy-benzoesäure, 1661 Teile Terephthalsäure, 1315 Teile 1,4:3,6-Dianhydro-D-sorbit (Isosorbid) und 572 Teile N,N'-Bis-(3-aminophenyl)-3,4,9,10-perylentetracarbonsäurediimid werden mit 10460 Teilen Essigsäureanhydrid versetzt und mit einem leichten Stickstoffstrom durchspült. Die Mischung wird innerhalb von 15 Minuten auf 140 °C erhitzt und diese Temperatur dann für 30 Minuten gehalten. Danach wird die Temperatur innerhalb von 195 Minuten auf 335 °C erhöht. Ab ca. 200 °C beginnt Essigsäure abzudestillieren. Nach dem Erreichen von 335 °C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und das Polymer abgekühlt und isoliert.

Das Polymer hat eine brillante rötlich türkise Farbe, die bei schrägem Anblick rötlich violett erscheint.

### Beispiel 4:

### Synthese eines cLCP:

3386 Teile 2-Hydroxy-6-naphthoesäure, 6630 Teile 4-Hydroxy-benzoesäure, 3404 Teile (1R,3S)-(+)-Camphersäure und 3165 Teile 4,4'-Dihydroxybiphenyl werden in einem Reaktor mit 10460 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Danach wird auf 270°C abgekühlt, mit Stickstoff belüftet und in die Polymerschmelze 150 Teile 5-Chlor-2-(2-hydroxy-1-naphthylazo)-4-methyl-benzolsulfonsäure eingetragen und eine weitere Stunde unter Vakuum bei dieser Temperatur kondensiert. Anschließend wird mit Stickstoff belüftet, abgekühlt und das Polymer isoliert.

Das Polymer zeigt unter senkrechtem Betrachtungswinkel eine rote bis kupferne Farbe. Bei schrägem Betrachtungswinkel schlägt sie nach gold um.

### Beispiel 5

### Synthese eines cLCP:

5640 Teile 2-Hydroxy-6-naphthoesäure, 6906 Teile 4-Hydroxy-benzoesäure, 1661 Teile Terephthalsäure, 186 Teile 4,4'-Dihydroxybiphenyl, 1023 Teile 1,4:3,6-Dianhydro-D-sorbit (Isosorbid) und 1303 Teile C.I. Pigment Orange 34 (C.I. No. 21115) werden in einem Reaktor mit 10460 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird mit Stickstoff belüftet, abgekühlt und das Polymer isoliert.

Das Polymer zeigt unter senkrechtem Betrachtungswinkel eine bräunlich Farbe. Bei schrägem Betrachtungswinkel schlägt sie nach rotgold um.

### Beispiel 6

### Synthese eines cLCP:

5640 Teile 2-Hydroxy-6-naphthoesäure, 6906 Teile 4-Hydroxy-benzoesäure, 1661 Teile Terephthalsäure, 745 Teile 4,4'-Dihydroxybiphenyl, 877 Teile 1,4:3,6-Dianhydro-D-sorbit (Isosorbid) und 130 Teile C.I. Pigment Orange 34 (C.I. No. 21115) werden in einem Reaktor mit 10460 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 310°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird mit Stickstoff belüftet, abgekühlt und das Polymer isoliert.

Das Polymer zeigt unter senkrechtem Betrachtungswinkel eine bräunlich Farbe. Bei schrägem Betrachtungswinkel schlägt sie nach rotgold um.

### Beispiel B1: Herstellung eines cLCP-Pulvers:

Das in Beispiel 1 hergestellte Polymer wird auf einer Schneidmühle vorzerkleinert und mit einer Universalmühle mit Messereinsatz auf eine Korngröße <1 mm gemahlen. Die Endmahlung erfolgt bei mittlerem Durchsatz auf einer Hochleistungsultrazentrifugalmühle mit einer 0,2 mm-Siebabtrennung. Dabei wird ein Pulver mit einer Korngröße <200µm erhalten.

### Beispiel B2:

Herstellung einer Pulverbeschichtung mit einer triboelektrischen Spritzpistole:
Das in Beispiel B1 hergestellte Pulver wird in den Pulverbehälter des Sprühgeräts ®Tribostar der Firma Intec, Dortmund, eingefüllt. Das Sprühgerät ist mit einem Normsprührohr und einer Sterninnenstange ausgerüstet. Mit diesem Sprühgerät wird in einer Sprühkabine bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film mit einer Schichtdicke von ca. 20µm erhalten, welcher unter senkrechtem Betrachtungswinkel eine rötlichblaue Farbe und unter schrägem Betrachtungswinkel eine brillante, rotviolette Farbe zeigt.

### Beispiel B3: Herstellung eines cLCP-Pulvers:

Das in Beispiel 2 hergestellte Polymer wird auf einer Schneidmühle vorzerkleinert und mit einer Universalmühle mit Messereinsatz auf eine Korngröße <1 mm gemahlen. Die Endmahlung erfolgt bei mittlerem Durchsatz auf einer Hochleistungsultrazentrifugalmühle mit einer 0,2 mm-Siebabtrennung. Dabei wird ein Pulver mit einer Korngröße <200µm erhalten.

### Beispiel B4:

Herstellung einer Pulverbeschichtung mit einer triboelektrischen Spritzpistole:
Das in Beispiel B3 hergestellte Pulver wird in den Pulverbehälter des Sprühgeräts ®Tribostar der Firma Intec, Dortmund, eingefüllt. Das Sprühgerät ist mit einem Normsprührohr und einer Sterninnenstange ausgerüstet. Mit diesem Sprühgerät wird in einer Sprühkabine bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film mit einer Schichtdicke von ca. 25 µm erhalten, welcher unter senkrechtem Betrachtungswinkel eine rotstichig bis grünstichig Farbe und unter schrägem Betrachtungswinkel eine brillante, blaugrüne Farbe zeigt.

### Beispiel B5 (Mahlung)

Das in Beispiel 4 hergestellte Polymer wird auf einer Schneidmühle vorzerkleinert und mit einer Universalmühle mit Messereinsatz auf eine Korngröße <1 mm gemahlen.

### Beispiel B6: (Film)

Wird das Polymerpulver aus Beispiel B5 auf ein auf 200 °C vorgeheiztes, schwarz grundiertes Blech aufgestreut, geschmolzen und mit einem Rakel zu einem Film ausgezogen, so erhält man unter senkrechtem Betrachtungswinkel einen brillanten, türkisen Film, welcher unter schrägem Betrachtungswinkel eine brillante, rötlichblaue Farbe zeigt.

### Beispiel B7 (Mahlung)

Das in Beispiel 5 hergestellte Polymer wird auf einer Schneidmühle vorzerkleinert und mit einer Universalmühle mit Messereinsatz auf eine Korngröße <1 mm gemahlen.

### Beispiel B8: (Film)

Wird das Polymerpulver aus Beispiel B7 auf ein auf 250 °C vorgeheiztes, schwarz grundiertes Blech aufgestreut, geschmolzen und mit einem Rakel zu einem Film ausgezogen, so erhält man unter senkrechtem Betrachtungswinkel einen brillanten, rotgoldenen Film, welcher unter schrägem Betrachtungswinkel eine brillante, grüngoldene Farbe zeigt.

### Beispiel B9 (Mahlung)

Das in Beispiel 6 hergestellte Polymer wird auf einer Schneidmühle vorzerkleinert und mit einer Universalmühle mit Messereinsatz auf eine Korngröße <1 mm gemahlen.

### Beispiel B10: (Film)

Wird das Polymerpulver aus Beispiel B9 auf ein auf 250 °C vorgeheiztes, schwarz grundiertes Blech aufgestreut, geschmolzen und mit einem Rakel zu einem Film ausgezogen, so erhält man unter senkrechtem Betrachtungswinkel einen brillanten, kupferfarbenen Film, welcher unter schrägem Betrachtungswinkel eine brillante, orangegoldene Farbe zeigt.

### Beispiel B11: (Film)

Wird eine warme 5 %ige Lösung des Polymers aus Beispiel B3 auf eine vorgeheizte Ceranplatte gegossen und dort zu einem dünnen Film ausgestrichen, so erhält man nach dem vollständigen Abdampfen des Lösungsmittels einen brillanten, rotgoldenen Film, welcher unter senkrechtem Betrachtungswinkel eine brillante, grünstichige Farbe aufweist.

## Patentansprüche

1. Cholesterisches flüssigkristallines Hauptkettenpolymer, welches mindestens ein farbiges Comonomer, das Licht im sichtbaren Wellenlängenbereich absorbiert, enthält.

2. Cholesterisches flüssigkristallines Polymer nach Anspruch 1, **dadurch gekennzeichnet, daß** die cholesterischen flüssigkristallinen Hauptkettenpolymere flüssigkristalline Polyester, Polyamide oder Polyesteramide sind, die aromatische und/oder cycloaliphatische Hydroxycarbonsäuren, aromatische Aminocarbonsäuren; aromatische und/oder cycloaliphatische Dicarbonsäuren und aromatische und/oder cycloaliphatische Diole und/oder Diamine; sowie chirale, bifunktionelle Comonomere enthalten.

3. Cholesterisches flüssigkristallines Polymer nach Anspruch 1 oder 2, **dadurch gekennzeichnet, daß** das Hauptkettenpolymer aus 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
0 bis 50 Mol% einer oder mehrerer Verbindungen aus der Gruppe der aromatischen Dicarbonsäuren und cycloaliphatischen Dicarbonsäuren;
0 bis 50 Mol% einer oder mehrerer Verbindungen aus der Gruppe der aromatischen und cycloaliphatischen Diole und Diamine;
0,1 bis 40 Mol%, vorzugsweise 1 bis 25 Mol%, an chiralen, bifunktionellen Comonomeren; und
0,1 bis 50 Mol%, vorzugsweise 1 bis 25 Mol%, an bifunktionellen, farbigen Komponenten, die mindestens eine Absorption im Wellenlängenbereich des sichtbaren Lichts aufweisen, wobei die Summe 100 Mol% ergibt, besteht.

4. Cholesterisches flüssigkristallines Polymer nach Anspruch 1, 2 oder 3, **dadurch gekennzeichnet, daß** das Hauptkettenpolymer eine oder mehrere Verbindungen aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl enthält.

5. Cholesterisches flüssigkristallines Polymer nach mindestens einem der Ansprüche 1 bis 4, **dadurch gekennzeichnet, daß** das farbige Comonomer ein bifunktionelles Hydroxy-, Amino- und/oder Carboxy-Derivat eines Anthanthron-, Anthrachinon-, Dioxazin-, Phthalocyanin-, Chinacridon-, Diketopyrrolopyrrol-, Perylen-, Perinon-, Azomethin- oder Azopigments, eine Aminostilbencarbonsäure oder eine Kombination davon ist.

6. Cholesterisches flüssigkristallines Polymer nach mindestens einem der Ansprüche 2 bis 5, **dadurch gekennzeichnet, daß** das chirale, bifunktionelle Comonomer eine oder mehrere Verbindungen der Gruppe Isosorbid, Isomannid, Camphersäure, Methylpiperazin, 3-Methyladipinsäure, Butan-2,3-diol, 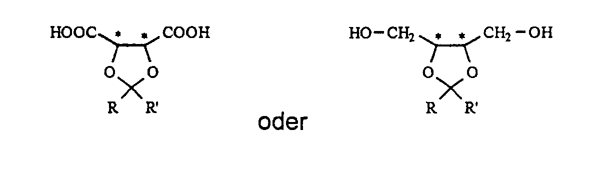 enthält, wobei R und R' jeweils unabhängig voneinander H, C₁-C₆-Alkyl oder Phenyl, vorzugsweise H oder CH₃, sind.

7. Cholesterisches flüssigkristallines Polymer nach mindestens einem der Ansprüche 1 bis 6, **dadurch gekennzeichnet, daß** das Polymer ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl; Camphersäure, Isosorbid, Isomannid als chirale Komponente; sowie als farbige Komponente eine oder mehrere der Verbindungen N,N'-Bis-(3-aminophenyl)-3,4,9,10-perylentetracarbonsäurediimid, N,N'-Bis-(4-hydroxyphenyl)-3,4,9,10-perylentetracarbonsäurediimid, N,N'-Bis-(4-carboxyphenyl)-3,4,9,10-perylentetracarbonsäurediimid und Perylen-3,4,9,10-tetracarbonsäure-3,4,9,10-dianhydrid enthält.

8. Verfahren zur Herstellung eines cholesterischen flüssigkristallinen Polymers nach mindestens einem der Ansprüche 1 bis 7, **dadurch gekennzeichnet, daß** die dem Polymer zugrundeliegenden Monomere als solche oder in Form eines reaktiven Derivats in der Schmelze, in Lösung oder in emulgierter oder disperser Phase kondensiert werden.

9. Verwendung eines cholesterischen flüssigkristallinen Polymers nach mindestens einem der Ansprüche 1 bis 7 als Werkstoff oder als Ausgangsmaterial zur Herstellung von Effektpigmenten oder Effektbeschichtungen.

## Claims

1. A cholesteric liquid-crystalline main-chain polymer which contains at least one colored comonomer which absorbs light in the visible wavelength region.

2. A cholesteric liquid-crystalline polymer as claimed in claim 1, wherein the cholesteric liquid-crystalline main-chain polymers are liquid-crystalline polyesters, polyamides or polyesteramides containing aromatic and/or cycloaliphatic hydroxycarboxylic acids, aromatic aminocarboxylic acids, aromatic and/or cycloaliphatic dicarboxylic acids and aromatic and/or cycloaliphatic diols and/or diamines, and chiral, bifunctional comonomers.

3. A cholesteric liquid-crystalline polymer as claimed in claim 1 or 2, wherein the main-chain polymer comprises from 0 to 99.8 mol% of one or more compounds from the group consisting of aromatic hydroxycarboxylic acids, cycloaliphatic hydroxycarboxylic acids and aromatic aminocarboxylic acids;
from 0 to 50 mol% of one or more compounds from the group consisting or aromatic dicarboxylic acids and cycloaliphatic dicarboxylic acids;
from 0 to 50 mol% of one or more compounds from the group consisting of aromatic and cycloaliphatic diols and diamines;
from 0.1 to 40 mol%, preferably from 1 to 25 mol%, of chiral, bifunctional comonomers; and
from 0.1 to 50 mol%, preferably from 1 to 25 mol%, of bifunctional, colored components which have at least one absorption in the wavelength region of visible light, where the sum is 100 mol%.

4. A cholesteric liquid-crystalline polymer as claimed in claim 1, 2 or 3, wherein the main-chain polymer contains one or more compounds from the group consisting of p-hydroxybenzoic acid, 2-hydroxy-6-naphthoic acid, terephthalic acid, isophthalic acid, 2,6-naphthalenedicarboxylic acid, hydroquinone, resorcinol and 4,4'-dihydroxybiphenyl.

5. A cholesteric liquid-crystalline polymer as claimed in at least one of claims 1 to 4, wherein the colored comonomer is a bifunctional hydroxyl, amino and/or carboxyl derivative of an anthanthrone, anthraquinone, dioxazine, phthalocyanine, quinacridone, diketopyrrolopyrrol, perylene, perinone, azomethine or azo pigment, an aminostilbenecarboxylic acid or a combination thereof.

6. A cholesteric liquid-crystalline polymer as claimed in at least one of claims 2 to 5, wherein the chiral, bifunctional comonomer is one or more compounds from the group consisting of isosorbide, isomannide, camphoric acid, methylpiperazine, 3-methyladipic acid, butane- 2,3-diole, 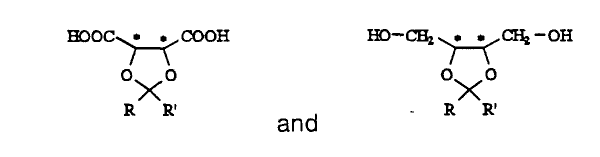 where R and R' are each, independently of one another, H, C₁-C₆-alkyl or phenyl, preferably H or CH₃.

7. A cholesteric liquid-crystalline polymer as claimed in at least one of claims 1 to 6, wherein the polymer contains one or more monomers from the group consisting of p-hydroxybenzoic acid, 2-hydroxy-6-naphthoic acid, terephthalic acid, isophthalic acid, 2,6-naphthalenedicarboxylic acid, hydroquinone, resorcinol and 4,4'-dihydroxybiphenyl; camphoric acid, isosorbide, isomannide as the chiral component; and, as colored component one or more of the compounds N,N'-bis-(3-aminophenyl)-3,4,9,10-perylenetetracarboxylic acid diimide, N,N'-bis-(4-hydroxyphenyl)-3,4,9,10-perylenetetracarboxylic acid diimide, N,N'-bis-(4-carboxyphenyl)-3,4,9,10-perylenetetracarboxylic acid diimide and perylene-3,4,9,10-tetracarboxylic 3,4,9,10-dianhydride.

8. A process for the preparation of a cholesteric liquid-crystalline polymer as claimed in at least one of claims 1 to 7, which comprises condensing the monomers on which the polymer is based, as such or in the form of a reactive derivative, in the melt, in solution or in emulsified or disperse phase.

9. A method of using a cholesteric liquid-crystalline polymer as claimed in at least one of claims 1 to 7, as a material or starting product for the preparation of effect pigments or effect coatings.

## Revendications

1. Polymère de chaîne principale à cristaux liquides cholestériques, qui contient au moins un comonomère coloré qui absorbe la lumière dans le domaine des longueurs d'onde visibles.

2. Polymère à cristaux liquides cholestériques selon la revendication 1, **caractérisé en ce que**, les polymères de chaîne principale à cristaux liquides cholestériques sont des polyesters, des polyamides ou des polyester-amides à cristaux liquides, qui contiennent des acides hydroxycarboxyliques aromatiques et/ou cycloaliphatiques, des acides aminocarboxyliques aromatiques ; des acides dicarboxyliques aromatiques et/ou cycloaliphatiques et/ou des diols et/ou des diamines aromatiques et/ou cycloaliphatiques ; ainsi que des comonomères chiraux, bifonctionnels.

3. Polymère à cristaux liquides cholestériques selon la revendication 1 ou 2, **caractérisé en ce que**, le polymère de chaîne principale est constitué de 0 à 99,8% en mole d'un ou de plusieurs composés choisis parmi les acides hydroxycarboxyliques aromatiques, les acides hydroxycarboxyliques cycloaliphatiques et les acides aminocarboxyliques aromatiques ;
de 0 à 50% en mole d'un ou de plusieurs composés choisis parmi les acides dicarboxyliques aromatiques et les acides dicarboxyliques cycloaliphatiques ;
de 0 à 50% en mole d'un ou de plusieurs composés choisis parmi les diols et les diamines aromatiques et cycloaliphatiques ;
de 0,1 à 40% en mole, de préférence de 1 à 25% en mole, de comonomères bifonctionnels, chiraux ; et
de 0,1 à 50% en mole, de préférence de 1 à 25% en mole, de constituants bifonctionnels, colorés, qui présentent une absorption dans le domaine des longueurs d'ondes de la lumière visible, la somme étant égale à 100% en mole.

4. Polymère à cristaux liquides cholestériques selon la revendication 1, 2 ou 3, **caractérisé en ce que**, le polymère de chaîne principale contient un ou plusieurs composés choisis parmi l'acide p-hydroxybenzoïque, l'acide 2-hydroxy-6-naphtoïque, l'acide téréphtalique, l'acide isophtalique, l'acide 2,6-naphtalène-dicarboxylique, l'hydroquinone, la résorcine et le 4,4'-dihydroxybiphényle.

5. Polymère à cristaux liquides cholestériques selon au moins l'une des revendications 1 à 4, **caractérisé en ce que**, le comonomère coloré est un dérivé bifonctionnel hydroxy, amino et/ou carboxy d'un pigment anthanthrone, anthraquinone, dioxazine, phtalocyanine, quinacridone, dicétopyrrolopyrrole, pérylène, périnone, azométhine ou azoïque, un acide aminostilbènecarboxylique ou une combinaison de ceux-ci.

6. Polymère à cristaux liquides cholestériques selon au moins l'une des revendications 2 à 5, **caractérisé en ce que**, le comonomère bifonctionnel, chiral contient un ou plusieurs composés choisis parmi l'isosorbide, l'isomannide, l'acide camphre-carboxylique, la méthyl-pipérazine, l'acide 3-méthyladipique, le butan-2,3-diol, 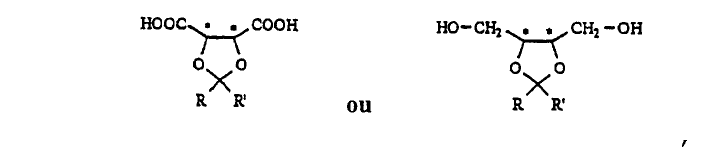 dans lesquelles R et R' sont respectivement, indépendamment l'un de l'autre, un atome d'hydrogène, un groupe alkyle en C₁ à C₆ ou phényle, de préférence un atome d'hydrogène ou CH₃.

7. Polymère à cristaux liquides cholestériques selon au moins l'une des revendications 1 à 6, **caractérisé en ce que**, le polymère contient un ou plusieurs monomères choisis parmi l'acide p-hydroxybenzoïque, l'acide 2-hydroxy-6-naphtoïque, l'acide téréphtalique, l'acide isophtalique, l'acide 2,6-naphtalènedicarboxylique, l'hydroquinone, la résorcine et le 4,4'-dihydroxybiphényle ; l'acide camphre-carboxylique, l'isosorbide, l'isomannide comme constituants chiraux ; ainsi que comme constituants colorés un ou plusieurs des composés N,N'-bis-(3-aminophényl)-3,4,9,10-pérylènetétracarboxadiimide, N,N'-bis-(4-hydroxyphényl)-3,4,9,10-pérylènetétracarboxa-diimide, N,N'-bis-(4-carboxyphényl)-3,4,9,10-pérylène-tétracarboxadiimide et pérylèn-3,4,9,10-tétracarboxy-3,4,9,10-dianhydride.

8. Procédé pour la préparation d'un polymère à cristaux liquides cholestériques selon au moins l'une des revendications 1 à 7, **caractérisé en ce que**, les monomères correspondant au polymère sont condensés tels quels ou sous la forme d'un dérivé réactif à l'état fondu, en solution ou en phase dispersée ou émulsionnée.

9. Utilisation d'un polymère à cristaux liquides cholestériques selon au moins l'une des revendications 1 à 7 comme matière valable ou comme matériau de départ pour la préparation de pigments à effet ou de revêtements à effet.
